# EUROPEAN PATENT SPECIFICATION

(11) **EP 4 269 145 B1**
(45) Date of publication and mention of the grant of the patent: **01.07.2026**
(21) Application number: 23163889.1
(22) Date of filing: 24.03.2023
(51) Int. Cl.: B60K 6/387, B60W 10/02, B60W 10/06, B60W 10/08, B60W 20/40, B60W 30/192, B60W 40/076, F16D 13/00, F16H 1/00, B60K 6/48, B60W 30/20, B60W 50/00

(54) **METHOD OF CONTROLLING HYBRID VEHICLE, CONTROL SYSTEM AND HYBRID VEHICLE**
VERFAHREN ZUR STEUERUNG EINES HYBRIDFAHRZEUGS, STEUERUNGSSYSTEM UND HYBRIDFAHRZEUG
PROCÉDÉ DE COMMANDE DE VÉHICULE HYBRIDE, SYSTÈME DE COMMANDE ET VÉHICULE HYBRIDE

(30) Priority: 28.04.2022 JP 2022074192
(43) Date of publication of application: 01.11.2023
(73) Proprietor: MAZDA MOTOR CORPORATION, Hiroshima 730-8670 (JP)
(72) Inventor: SAITO, Tadashi, Aki-gun, Hiroshima, 730-8670 (JP); HIKICHI, Yuki, Aki-gun, Hiroshima, 730-8670 (JP)
(74) Representative: Müller-Boré & Partner Patentanwälte PartG mbB

(56) References cited:
- DE-A1- 102012 224 211
- US-A1- 2018 043 880
- US-A1- 2021 129 830
- US-A1- 2022 097 680

## Description

### Technical Field

The present invention relates to a method of controlling a hybrid vehicle provided with an engine and a motor as power sources, and a friction engagement element (clutch) which switches between transmission and interception of torque between the engine and the motor, and also relates to a control system therefor and a hybrid vehicle.

### Background

Conventionally, it is known that hybrid vehicles are provided with an engine (internal combustion engine), a motor (electric motor) provided downstream of the engine in a power transmission path to wheels, and a clutch (friction engagement element) provided between the engine and the motor so as to be connectable and disconnectable. This hybrid vehicle is switchable of a first traveling mode in which the hybrid vehicle travels using a torque of the motor without using a torque of the engine (EV traveling mode), and a second traveling mode in which the hybrid vehicle travels at least using the engine torque (engine traveling mode or hybrid traveling mode). Particularly, this hybrid vehicle performs an engine startup control in which, when switching the traveling mode from the first traveling mode to the second traveling mode, in order to start the stopped engine, the clutch in a disengaged state is transited to an engaged state, and the torque of the motor is transmitted to the engine via the clutch (in other words, the engine is cranked by the motor).

For example, JP2018-030507A discloses a technique relevant to such a hybrid vehicle. In detail, this technique suppresses a torque shock occurring on the vehicle accompanying an engagement of a clutch by gradually increasing the transmitting torque of the clutch until a rotational speed difference between an input shaft and an output shaft of the clutch becomes below a threshold, when transiting the traveling mode from the first traveling mode (EV mode) to the second traveling mode (HV mode).

In such a hybrid vehicle, when switching the traveling mode from the first traveling mode to the second traveling mode (i.e., when starting the engine by the engine startup control), since the motor is used for traveling (propelling the vehicle), the motor rotational speed changes fundamentally according to a vehicle driver's demand, and the engine speed increases from 0 by the cranking with the motor and will eventually synchronize with the motor rotational speed. Thus, when the engine speed synchronizes the motor rotational speed, there may be a difference in the torque between the engine and the motor. In this case, if it is in a state where the torque is fully and mutually transmittable between the engine and the motor (i.e., in a fully engaged state where the clutch transmits the entire torque), a comparatively large oscillation (hereinafter, referred to as "vehicle shock") may occur according to the difference in the torque between the engine and the motor, and it may give a person on board uncomfortableness. On the other hand, if the clutch and the motor are controlled to give priority to the suppression of such a vehicle shock, the response of the engine startup is deteriorated.

US 2022/097680 A1 describes that an electronic control unit is configured to: control a clutch actuator based on first phase definition that defines a plurality of stages of progress provided for each of control states of the clutch, the clutch being switched among the control states in a process of starting the engine; and control at least one of a motor and an engine based on second phase definition that defines a plurality of stages of progress, the second phase definition being different from the first phase definition.

US 2018/043880 A1 describes a control device that includes an electronic control unit that causes a rotational speed of the rotating electric machine to change according to a predetermined first change pattern after the rotational speed of the rotating electric machine changes from a pre-shifting synchronous rotational speed in association with progress of the shifting operation until reaching a first synchronous range that is determined on the basis of a rotational speed of the internal combustion engine.

US 2021/129830 A1 describes that a hybrid vehicle includes an engine, a motor that outputs a torque to a driving system, a hydraulic clutch that connects the engine with the motor and disconnects the engine from the motor, and a control device that performs slip control of the hydraulic clutch in response to satisfaction of a start condition of the engine and controls the motor to output at least a cranking torque to the engine.

DE 10 2012 224211 A1 describes connecting a clutch between a combustion engine and an electric machine. A target rotation speed of the combustion engine is provided for starting the combustion engine, where the target rotation speed is smaller than a rotation speed of the electric machine.

### Summary

The present invention is made in view of solving the problems of the conventional technique described above, and one purpose thereof is to provide a method of controlling a hybrid vehicle, in which, when an engine of the hybrid vehicle is started, by securely controlling a friction engagement element provided between the engine and a motor, a vehicle shock can be suppressed, while securing the response of the engine startup, and to provide a control system therefor.

The above-described purpose is achieved by the invention as defined in the independent claims.

According to the invention, when starting the engine in order to switch the traveling mode, the engaging torque of the friction engagement element is temporarily reduced, after the engine speed is raised by cranking with the motor and before the engine speed coincides with the motor rotational speed. Therefore, when the engine speed synchronizes with the motor rotational speed, a transmitting torque of the friction engagement element can be reduced. As a result, the difference in the torque between the engine and the motor can be compensated or cancelled by the friction engagement element in a slip state where the transmitting torque is reduced. That is, it can be compensated or cancelled as a slip torque of the friction engagement element, and the vehicle shock caused by the difference in the torque can be suppressed. Further, since such a reduction of the engaging torque of the friction engagement element is temporary, the response of engine startup can be secured. Therefore, according to the invention, when starting the engine in order to switch the traveling mode, the vehicle shock can be suppressed, while securing the response of the engine startup.

Note that the engaging torque of the friction engagement element is a torque which is applied to the friction engagement element, and is equivalent to a degree of engagement of the friction engagement element. Further, the transmitting torque of the friction engagement element is equivalent to a torque transmitted between the motor and the engine via the friction engagement element.

The temporarily reducing the engaging torque may include starting the temporary reduction of the engaging torque, when a difference between the engine speed and the motor rotational speed becomes below a given value.

According to this configuration, the vehicle shock caused by the difference in the torque during the rotation synchronization between the engine and the motor can be suppressed effectively.

The raising the engaging torque may include ending the temporary reduction of the engaging torque, and starting the raise of the engaging torque for setting the friction engagement element to the fully engaged state, when a state where a difference between the engine speed and the motor rotational speed is below a given value continues for a given period of time.

According to this configuration, the temporary reduction of the engaging torque can be ended appropriately at a timing when the difference in the torque between the engine and the motor becomes e.g., almost zero. Thus, it becomes possible to effectively achieve both the assurance of the response of the engine startup and the suppression of the vehicle shock.

According to the invention, by transiting the friction engagement element in the disengaged state to the engaged state, and transmitting the torque of the motor to the engine via the friction engagement element, the engine speed can be raised securely.

According to the invention, when there is no given acceleration demand, the shock caused when the friction engagement element in the disengaged state starts to engage can be reduced. When there is the given acceleration demand, a prompt startup of the engine can be secured.

In the temporarily reducing the engaging torque, the hydraulic pressure applied to the friction engagement element may be lower than the second hydraulic pressure and higher than the third hydraulic pressure.

According to this configuration, it becomes possible to effectively achieve both the assurance of the response of the engine startup and the suppression of the vehicle shock.

### Brief Description of Drawings

Fig. 1 is an outline block diagram of a hybrid vehicle according to one embodiment of the present invention.
Fig. 2 is an outline block diagram of a first clutch according to this embodiment of the present invention.
Fig. 3 is a block diagram illustrating an electric configuration of the hybrid vehicle according to this embodiment of the present invention.
Fig. 4 is a time chart illustrating one example of a conventional engine startup control.
Fig. 5 is a time chart illustrating one example of an engine startup control according to this embodiment of the present invention.
Fig. 6 is a flowchart illustrating the engine startup control according to this embodiment of the present invention.

### Detailed Description

Hereinafter, a method of controlling a hybrid vehicle according to one embodiment of the present invention, a control system therefor, and a hybrid vehicle will be described with reference to the accompanying drawings. All of the features as shown in the drawings may not necessarily be essential.

### [Device Configuration]

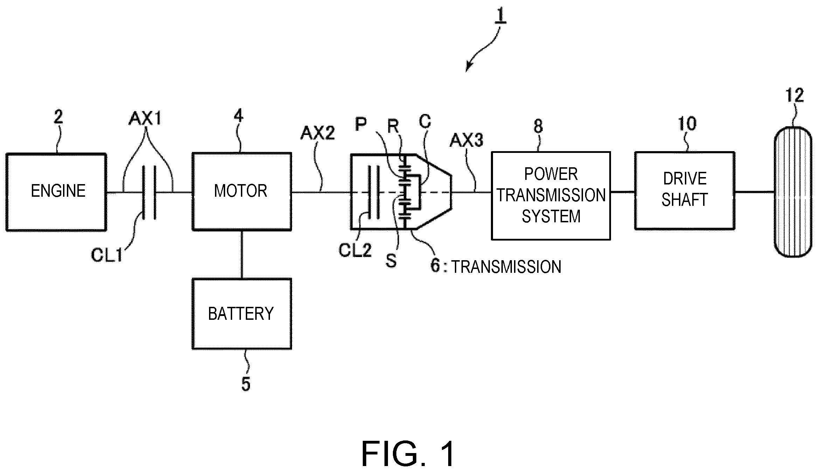

Fig. 1 is an outline block diagram of the hybrid vehicle to which the method of controlling the hybrid vehicle according to this embodiment of the present invention is applied, and the control system therefor.

As illustrated in Fig. 1, a hybrid vehicle 1 mainly includes an engine 2 (for example, a gasoline engine) which generates a torque for driving or propelling the hybrid vehicle 1, and a motor (or an electric motor) 4 which may be provided downstream of the engine 2 in a power transmission path of the hybrid vehicle 1, and generates the torque for driving the hybrid vehicle 1. Particularly, the hybrid vehicle 1 also includes a battery 5 which delivers and receives electric power to/from the motor 4 via an inverter (not illustrated), a transmission 6 which is provided downstream of the motor 4 in the power transmission path of the hybrid vehicle 1, and may change an engine speed of the engine 2 and/or a rotational speed of the motor 4, a power transmission system 8 which transmits a torque from the transmission 6 to a downstream side thereof, a drive shaft 10 which drives wheels 12 by the torque from the power transmission system 8, and the wheels (driving wheels) 12.

An output shaft of the engine 2 and a rotational shaft of the motor 4 may be coaxially coupled to each other by an axis AX1 via a first clutch CL1 which is connectable and disconnectable (engageable and disengageable). This first clutch CL1 switches between "transmission" and "interception (or disconnection)" of the torque between the engine 2 and the motor 4. For example, the first clutch CL1 is comprised of a dry multiplate clutch or a wet multiplate clutch which controls continuously or stepwisely a clutch operating fluid flow rate and/or a clutch operating fluid pressure by a motor or a solenoid (not illustrated) and is changeable of a transmitting torque capacity.

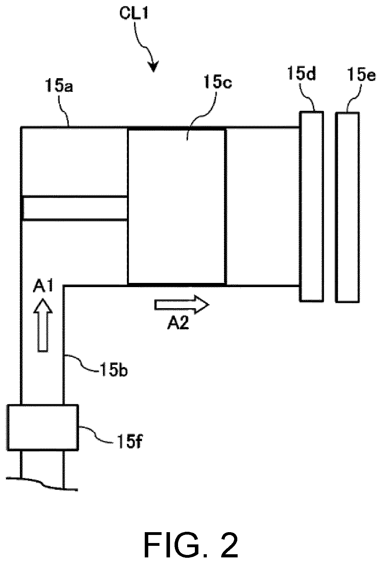

Here, referring to Fig. 2, a concrete structure of the first clutch CL1 is described. Fig. 2 is an outline block diagram illustrating one example of the first clutch CL1. As illustrated in Fig. 2, the first clutch CL1 may include a hydraulic chamber 15a into which oil is introduced, an oil passage 15b (see an arrow A1) which supplies oil to the hydraulic chamber 15a, a clutch piston 15c (see an arrow A2) which operates according to the oil supplied to the hydraulic chamber 15a (i.e., hydraulic pressure), a first clutch plate 15d with which the clutch piston 15c contacts, a second clutch plate 15e which becomes transmittable of a torque with the first clutch plate 15d when the clutch piston 15c contacts the first clutch plate 15d, and a solenoid 15f which is provided to the oil passage 15b and is adjustable of the hydraulic pressure supplied to the hydraulic chamber 15a.

The first clutch CL1 is changeable, by controlling the hydraulic pressure applied, between a released or disengaged state where the clutch piston 15c separates from the first clutch plate 15d, and an engaged state where the clutch piston 15c contacts the first clutch plate 15d. In the disengaged state of the first clutch CL1, the torque transmission between the engine 2 and the motor 4 is intercepted (or disconnected), and in the engaged state of the first clutch CL1, the torque is transmitted between the engine 2 and the motor 4. Although this engaged state is the state where the clutch piston 15c is in contact with the first clutch plate 15d as described above, this state includes a slip state where the first clutch plate 15d and the second clutch plate 15e slip (typically, a state where the first clutch plate 15d and the second clutch plate 15e separate from each other, and the torque is transmitted via oil therebetween), and a fully engaged state where the torque is fully transmitted between the first clutch plate 15d and the second clutch plate 15e (fundamentally, a state where the first clutch plate 15d and the second clutch plate 15e contact each other firmly). Note that such a first clutch CL1 is one example of a "friction engagement element" in the present invention.

Returning to Fig. 1, the rotational shaft of the motor 4 and the rotational shaft of the transmission 6 are coaxially coupled to each other via an axis AX2. Typically, the transmission 6 includes therein one or more planetary gear sets having a sun gear S, a ring gear R, a pinion gear P (planet gear), and a carrier C, and a friction engagement element, such as a clutch and a brake, and is an automatic transmission having a function for automatically switching a gear stage (gear ratio) according to a vehicle traveling speed, an engine speed, and the like. The ring gear R is disposed coaxially with the sun gear S, and the pinion gear P is disposed between the sun gear S and the ring gear R so that it meshes with the sun gear S and the ring gear R. The carrier C holds the pinion gear P so as to be rotatable, and so as to be revolvable around the sun gear S.

Further, the transmission 6 may include therein a second clutch CL2 which is connectable and disconnectable (engageable and disengageable), and the second clutch CL2 switches between "transmission" and "interception (or disconnection)" of a torque between the upstream side of the transmission 6 (the engine 2 and the motor 4) and the downstream side of the transmission 6 (the wheel 12 etc.). For example, the second clutch CL2 is comprised of a dry multiplate clutch or a wet multiplate clutch which controls continuously or stepwisely the clutch operating fluid flow rate and/or the clutch operating fluid pressure by the motor and the solenoid (not illustrated) and is changeable of the transmitting torque capacity. Further, the second clutch CL2 is also switchable of a state between a released or disengaged state and an engaged state (a slip state or a fully engaged state) by controlling the hydraulic pressure applied.

Note that, the second clutch CL2 may be comprised of a large number of clutches which are used to variously switch the gear stage of the transmission 6. Further, although in Fig. 1 only one planetary gear set is illustrated for simplification, the transmission 6 may be provided with a plurality of planetary gear sets. For example, by selectively engaging the friction engagement elements, such as a plurality of clutches which are represented by the second clutch CL2, and a plurality of brakes (not illustrated), and switching the power transmission path passing through the planetary gear sets, a plurality of forward gear stages and one reverse gear stage can be realized.

A torque is inputted into the power transmission system 8 via an output axis AX3 of the transmission 6. The power transmission system 8 is comprised of a differential gear which distributes a driving force to a pair of left and right wheels 12, and a final gear.

The hybrid vehicle 1 is changeable of a traveling mode by switching "engagement" and "release" of the first clutch CL1. That is, the hybrid vehicle 1 has a first traveling mode in which the first clutch CL1 is set to the disengaged state and the travel hybrid vehicle 1 travels using the torque of the motor 4, without using the torque of the engine 2, and a second traveling mode in which the first clutch CL1 is set to the engaged state, and the hybrid vehicle 1 travels at least using the torque of the engine 2. The first traveling mode is a so-called "EV traveling mode," and the second traveling mode includes an engine traveling mode in which the hybrid vehicle 1 travels only using the torque of the engine 2, and a hybrid traveling mode in which the hybrid vehicle 1 travels using the torques of both the engine 2 and the motor 4.

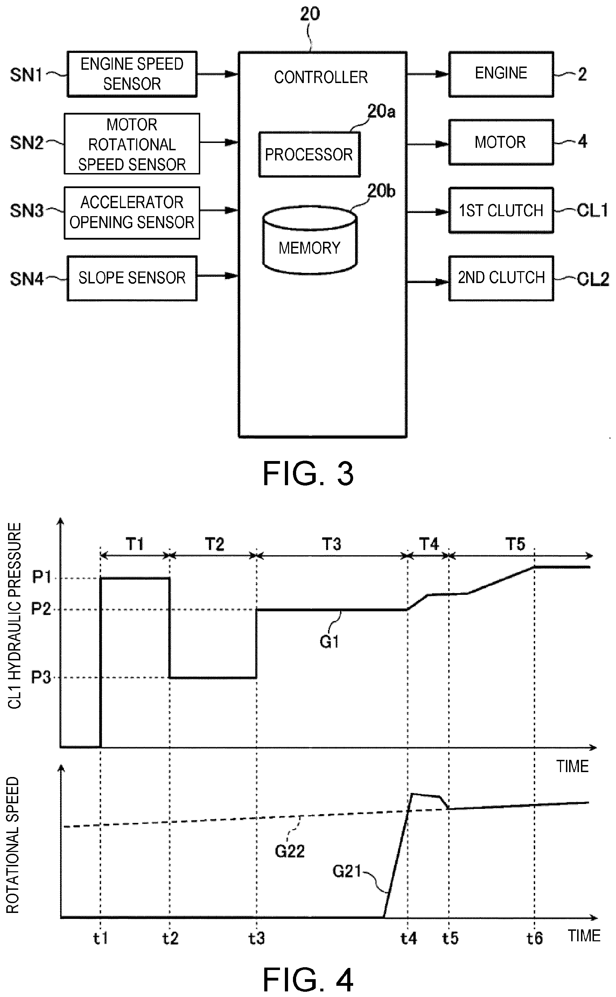

Next, Fig. 3 is a block diagram illustrating an electric configuration of the hybrid vehicle according to this embodiment of the present invention.

As illustrated in Fig. 3, the controller 20 may receive inputs of a signal from an engine speed sensor SN1 which detects the engine speed of the engine 2, a signal from a motor rotational speed sensor SN2 which detects the rotational speed of the motor 4, a signal from an accelerator opening sensor SN3 which detects an accelerator opening corresponding to a depressing amount of an accelerator pedal by a vehicle driver, and/or a signal from a slope sensor SN4 which detects a slope angle of a road surface on which the hybrid vehicle 1 travels (or a tilt angle of the hybrid vehicle 1 on the road surface in its front-and-rear direction).

The controller 20 may be comprised of a computer provided with one or more processors 20a (typically, CPUs), and a memory 20b, such as a ROM and a RAM, which stores various kinds of programs interpreted and executed by the processors (including a basic control program, such as an OS, and an application program which is booted on the OS and realizes a specific function), and various kinds of data. The controller 20 corresponds to the "control device" in the present invention, and performs the "method of controlling a hybrid vehicle" in the present invention.

Particularly, the controller 20 outputs a control signal mainly to the engine 2, the motor 4, the first clutch CL1, and the second clutch CL2 to control them based on the detection signals from the sensors SN1-SN4 described above. For example, the controller 20 performs a control for adjusting an ignition timing, a fuel injection timing, and a fuel injection amount of the engine 2, a control for adjusting the rotational speed and the torque of the motor 4, a control for switching states of the first and second clutches CL1 and CL2 (the disengaged state, the slip state, and the fully engaged state), and the like. The controller 20 may control a spark plug, a fuel injection valve, and a throttle of the engine 2, control the motor 4 via an inverter, and control the first and second clutches CL1 and CL2 via a hydraulic control circuit (the motor, the solenoid 15f, and the like.).

### [Control of Hybrid Vehicle]

Next, the controls performed by the controller 20 in this embodiment are described. In this embodiment, in order to switch the traveling mode from the first traveling mode in which the hybrid vehicle 1 travels using the torque of the motor 4 without using the torque of the engine 2, to the second traveling mode in which the hybrid vehicle 1 travels at least using the torque of the engine 2, the controller 20 mainly performs an engine startup control for starting the stopped engine 2 by controlling the hydraulic pressure applied to the first clutch CL1 (hereinafter, referred to as "CL1 hydraulic pressure") to transit the first clutch CL1 from the disengaged state to the engaged state, and controlling the motor 4 and the engine 2 to start the engine 2 by cranking with the motor 4. Note that the CL1 hydraulic pressure may correspond to a command value of the hydraulic pressure applied to the first clutch CL1 (indicated hydraulic pressure). In realizing the CL1 hydraulic pressure, the controller 20 may control the hydraulic control circuit (for example, the solenoid 15f) of the first clutch CL1.

First, referring to Fig. 4, a basic concept of the engine startup control is described. Fig. 4 is a time chart illustrating one example of a conventional engine startup control. In Fig. 4, a graph G1 illustrates a chronological change in the CL1 hydraulic pressure, and graphs G21 and G22 illustrate chronological changes in the engine speed and the motor rotational speed, respectively.

At a time t1, the controller 20 starts the engine startup control for starting the stopped engine 2 in order to switch the traveling mode from the first traveling mode to the second traveling mode. In detail, from the time t1, in order to fill up (precharge) the hydraulic chamber 15a of the first clutch CL1 with oil, the controller 20 may set the CL1 hydraulic pressure to a first hydraulic pressure P1 which is comparatively large (period T1). Next, after a time t2, the controller 20 may bring the clutch piston 15c which is separated from the clutch piston 15d in the first clutch CL1 into contact with the first clutch plate 15d, and the controller 20 may then raise the engine speed gradually by cranking with the motor 4 in a state where the first clutch plate 15d and the second clutch plate 15e slip. In detail, in order to reduce the shock caused when the clutch piston 15c contacts the first clutch plate 15d, the controller 20 may first maintain the CL1 hydraulic pressure at a third hydraulic pressure P3 which is greatly reduced from the first hydraulic pressure P1 (period T2). Then, from a time t3, the controller 20 may wait for the engine speed to rise by cranking with the motor 4, while maintaining the CL1 hydraulic pressure at the second hydraulic pressure P2 larger than the third hydraulic pressure P3 (period T3).

Next, at a time t4, the increased engine speed reaches the motor rotational speed, and the controller 20 may slightly raise the CL1 hydraulic pressure so that the engine speed synchronizes with the motor rotational speed (in detail, so that the rotation synchronous state is stabilized) (period T4). Next, at a time t5, the engine speed synchronizes with the motor rotational speed, and the controller 20 then further raises the CL1 hydraulic pressure to set the first clutch CL1 to the fully engaged state, and when the first clutch CL1 is set to the fully engaged state, it ends the raise of the CL1 hydraulic pressure and maintains the CL1 hydraulic pressure constant (period T5).

Here, when the engine speed synchronizes with the motor rotational speed as described above, there may be a difference in torque between the engine 2 and the motor 4. In this case, if it is in a state where the first clutch CL1 transmits the mutual torque of the engine 2 and the motor 4 nearly fully (the fully engaged state or the slip state close to the fully engaged state), a comparatively large oscillation occurs according to the difference in the torque between the engine 2 and the motor 4 (vehicle shock), and it may give a person on board uncomfortableness. On the other hand, if the first clutch CL1 and the motor 4 are controlled gently to give priority to suppression of such a vehicle shock, the response of the engine startup is deteriorated.

Therefore, in this embodiment, the first clutch CL1 is controlled so that, when starting the engine 2 for switching the traveling mode from the first traveling mode to the second traveling mode, both assurance of the response of the engine startup and the suppression of the vehicle shock are achieved. In detail, the controller 20 temporarily reduces the CL1 hydraulic pressure immediately before the engine speed which rose by cranking with the motor 4 coincides with the motor rotational speed, in order to reduce an engaging torque of the first clutch CL1 (a torque which is applied to the first clutch plate 15d and the second clutch plate 15e of the first clutch CL1, and is equivalent to a degree of engagement of the first clutch CL1). Therefore, when the engine speed synchronizes with the motor rotational speed, the transmitting torque of the first clutch CL1 (equivalent to the torque transmitted to the engine 2 from the motor 4 via the first clutch CL1) can be reduced temporarily. As a result, the difference in the torque between the engine 2 and the motor 4 can be compensated of cancelled in the first clutch CL1 in the slip state where the transmitting torque is reduced, that is, it can be absorbed as a slip torque of the first clutch CL1 so that it becomes possible to suppress the vehicle shock. Further, since such a reduction of the engaging torque of the first clutch CL1 is temporary, the response of the engine startup can be secured.

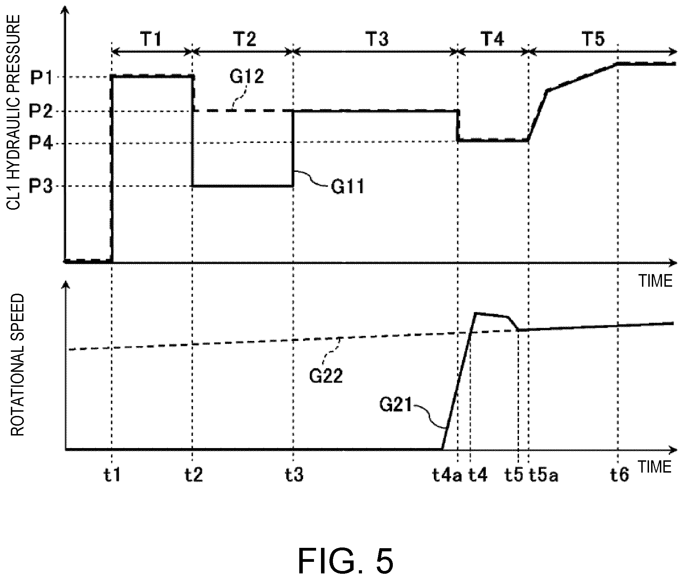

Next, referring to Fig. 5, the engine startup control according to this embodiment is described concretely. Fig. 5 is a time chart illustrating one example of the engine startup control according to this embodiment. In Fig. 5, graphs G11 and G12 illustrate chronological changes in the CL1 hydraulic pressure (indicated hydraulic pressure), and graphs G21 and G22 illustrate chronological changes in the engine speed and the motor rotational speed, respectively. Particularly, the graph G12 illustrates the CL1 hydraulic pressure applied when there is a given acceleration demand from the driver during the engine startup control, in detail, a demand for promptly starting the engine 2 and accelerating the hybrid vehicle 1 at a comparatively large acceleration (hereinafter, referred to as "fast startup demand"), and the graph G11 illustrates the CL1 hydraulic pressure applied when there is no such fast startup demand.

The fast startup demand is given, for example, in a case where the accelerator opening detected by the accelerator opening sensor SN3 is above a given value, and/or a case where the slope angle of the road surface detected by the slope sensor SN4 is above a given value.

Note that, in Fig. 5, explanation of those elements denoted by the same reference characters as Fig. 4 is omitted suitably because they have the same meanings as Fig. 4.

First, the case where there is no fast startup demand is described (see the graph G11). From the time t1 until immediately before the time t4 (periods T1, T2, and T3), the controller 20 performs a control similar to Fig. 4. In this embodiment, the controller 20 reduces the CL1 hydraulic pressure down to a fourth hydraulic pressure P4 temporarily in order to reduce the engaging torque of the first clutch CL 1, immediately before the time t4 at which the engine speed which rose by cranking with the motor 4 reaches the motor rotational speed (in detail, from a time t4a at which the difference between the engine speed and the motor rotational speed becomes below a given value (period T4). The fourth hydraulic pressure P4 is lower than the second hydraulic pressure P2 which is applied in the period T3, and is equal to or higher than the third hydraulic pressure P3 which is applied in the period T2 (P3≤P4<P2).

Next, the controller 20 ends the temporary reduction of the CL1 hydraulic pressure at a time t5a which is a given period of time after the time t5 at which the engine speed coincides with the motor rotational speed (in other words, at the time t5a at which a state in which the difference between the engine speed and the motor rotational speed is below the given value (a value near 0) has continued for the given period of time. The time t5a is equivalent to a timing at which the difference in the torque between the engine 2 and the motor 4 becomes almost zero. Then, after the time t5a, the controller 20 raises the CL1 hydraulic pressure in order to set the first clutch CL1 to the fully engaged state, and when the first clutch CL1 is set to the fully engaged state, it ends the raise of the CL1 hydraulic pressure and maintains the CL1 hydraulic pressure constant (period T5).

Next, the case where there is the fast startup demand is described (see the graph G12). Here, only the differences from the above-described case where there is no fast startup demand (see the graph G11) are described. When there is the fast startup demand, the controller 20 does not perform the temporary reduction of the CL1 hydraulic pressure down to the third hydraulic pressure P3 for reducing the shock caused when the clutch piston 15c contacts the first clutch plate 15d, such as the case where there is no fast startup demand, in the period T2 immediately after the period T1 during which the CL1 hydraulic pressure is set to the first hydraulic pressure P1 in order to fill up the hydraulic chamber 15a with oil. In detail, when there is the fast startup demand, in the period T2, the controller 20 sets the CL1 hydraulic pressure to the second hydraulic pressure P2 which is applied in the period T3 where it stands by for the raise of the engine speed (i.e., maintains the CL1 hydraulic pressure at the second hydraulic pressure P2 over the periods T2 and T3). Thus, it permits the shock caused when the clutch piston 15c contacts the first clutch plate 15d to some extent, and gives priority to the prompt startup of the engine 2.

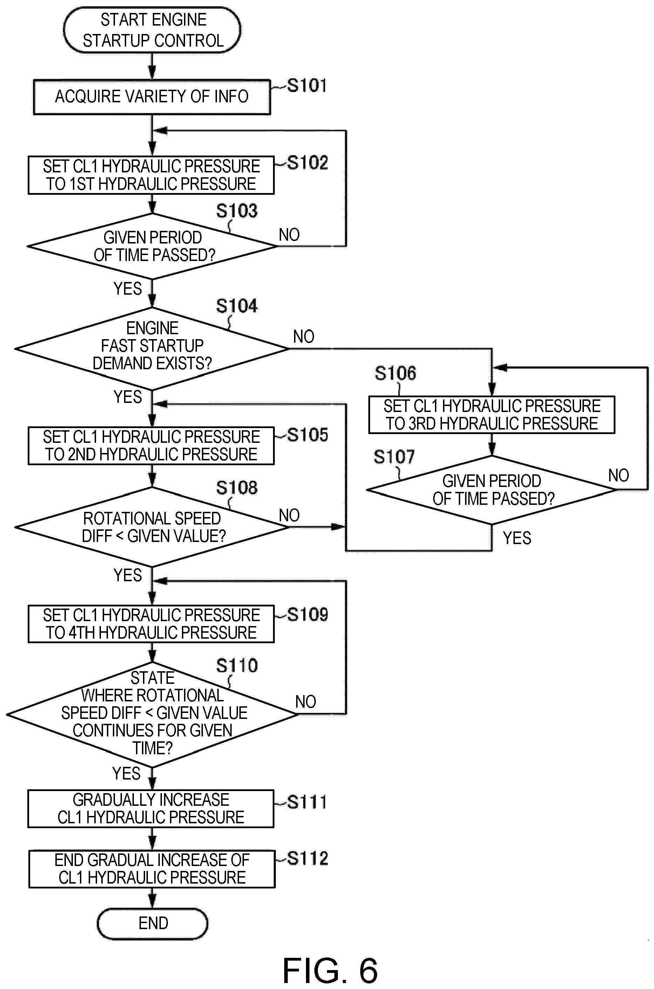

Next, referring to Fig. 6, the overall flow of the engine startup control according to this embodiment is described. Fig. 6 is a flowchart illustrating the engine startup control performed by the controller 20 in this embodiment. Note that the engine startup control according to this flowchart is started when the startup demand of the currently-stopped engine 2 is issued. For example, this startup demand is issued when the driver demands a comparatively large acceleration in the EV mode (i.e., when the driver demands such an acceleration that switching of the traveling mode from the EV mode to the HV mode is required). In addition, the startup demand is issued from a control system including a powertrain, other than such a driver's demand (hereinafter, this startup demand is suitably referred to as "system demand"). This system demand is issued when the traveling mode of the hybrid vehicle 1 is to be switched from the EV mode to the HV mode according to the traveling speed, an engine load, a battery state, an engine temperature, etc. For example, the system demand is issued when only the driving force of the motor 4 is insufficient to realize a target driving force, when the battery 5 is to be charged (when SOC of the battery 5 is below a given value), or when engine braking by the engine 2 is to be applied during a slowdown.

When the engine startup control is started, at Step S101, the controller 20 may first acquire a variety of information. Particularly, the controller 20 acquires the detection signals at least from the sensors SN1-SN4 described above.

Next, at Step S102, the controller 20 controls the first clutch CL1 in order to fill up the hydraulic chamber 15a of the first clutch CL1 with oil so that the CL1 hydraulic pressure is set to the comparatively large first hydraulic pressure P1 (precharge). Then, the controller 20 transits to Step S103 where it determines whether a given period of time passed after setting the CL1 hydraulic pressure to the first hydraulic pressure P1. This given period of time is defined in advance based on a period of time (obtained by an experiment, a simulation, or a given calculation formula) required for filling up the hydraulic chamber 15a of the first clutch CL1 with oil.

As a result of Step S103, if the given period of time passed (Step S103: Yes), the controller 20 transits to Step S104. On the other hand, if the given period of time has not yet passed (Step S103: No), the controller 20 returns to Step S102. In this case, the controller 20 maintains the CL1 hydraulic pressure at the first hydraulic pressure P1 by repeating Steps S102 and S103 until the given period of time passes.

Next, at Step S104, the controller 20 determines whether there is the fast startup demand of the engine 2. If the accelerator opening detected by the accelerator opening sensor SN3 is above the given value, or if the slope angle of the road surface detected by the slope sensor SN4 is above the given value, the controller 20 may determine that there is the fast startup demand (Step S104: Yes), and transits to Step S105. On the other hand, if there is no such fast startup demand (Step S104: No), the controller 20 transits to Step S106.

If there is no fast startup demand (Step S104: No), the controller 20 controls the first clutch CL1 at Step S106 to set the CL1 hydraulic pressure to the third hydraulic pressure P3 which is greatly reduced from the first hydraulic pressure P1, in order to reduce the shock caused when the clutch piston 15c contacts the first clutch plate 15d. Then, the controller 20 transits to Step S107, where it determines whether a given period of time passed after the CL1 hydraulic pressure is set to the third hydraulic pressure P3. This given period of time is defined in advance based on a period of time (obtained by an experiment, a simulation, or a given calculation formula) after the hydraulic chamber 15a of the first clutch CL1 is filled up with oil until the clutch piston 15c contacts the first clutch plate 15d.

As a result of Step S107, if the given period of time passed (Step S107: Yes), the controller 20 transits to Step S105. On the other hand, if the given period of time has not yet passed (Step S107: No), the controller 20 returns to Step S106. In this case, the controller 20 may maintain the CL1 hydraulic pressure at the third hydraulic pressure P3 by repeating Steps S106 and S107 until the given period of time passes.

On the other hand, when there is the fast startup demand (Step S104: Yes), in order to give priority to the prompt startup of the engine 2, the controller 20 controls the first clutch CL1 at Step S105 to set the CL1 hydraulic pressure to the second hydraulic pressure P2 larger than the third hydraulic pressure P3, without setting the CL1 hydraulic pressure to the third hydraulic pressure P3. Further, if there is no fast startup demand, the controller 20 may control the first clutch CL1 to change the CL1 hydraulic pressure to the second hydraulic pressure P2 from the third hydraulic pressure P3 after maintaining the CL1 hydraulic pressure at the third hydraulic pressure P3 for the given period of time (Step S107: Yes → Step S105).

Thus, when the CL1 hydraulic pressure is set to the second hydraulic pressure P2, the first clutch CL1 becomes in the state where the torque of the motor 4 can be transmitted to the engine 2 (in detail, the slip state). Here, the controller 20 controls the engine 2 and the motor 4 to raise the engine speed by cranking with the motor 4. In this way, the controller 20 waits for the engine speed to rise, while maintaining the CL1 hydraulic pressure at the second hydraulic pressure P2.

Next, the controller 20 transits to Step S108 after the above-described Step S105, where it determines whether the difference between the engine speed and the motor rotational speed (rotational speed difference) becomes below the given value. Here, the controller 20 may determine a situation where the engine speed which rose by cranking with the motor 4 is about to reach the motor rotational speed. If the rotational speed difference becomes below the given value (Step S108: Yes), the controller 20 determines that the engine speed is about to reach the motor rotational speed, and transits to Step S109, where it controls the first clutch CL1 to temporarily reduce the CL1 hydraulic pressure down to the fourth hydraulic pressure P4. Thus, the vehicle shock caused by the difference in the torque during the rotation synchronization between the engine 2 and the motor 4 is suppressed. From such viewpoints, the given value for determining the rotational speed difference at Step S108 may be defined in advance based on the timing before the engine speed reaches the motor rotational speed, at which the temporary reduction of the CL1 hydraulic pressure is to be started in order to securely suppress such a vehicle shock. Further, as for the fourth hydraulic pressure P4 to which the CL1 hydraulic pressure is temporarily reduced, the CL1 hydraulic pressure which does not deteriorate the response of engine startup while suppressing such a vehicle shock is applied. Fundamentally, the fourth hydraulic pressure P4 may be set at least lower than the second hydraulic pressure P2 and higher than the third hydraulic pressure P3. The given value and the fourth hydraulic pressure P4 are defined based on an experiment, a simulation, a given calculation formula, etc.

On the other hand, if the rotational speed difference does not become below the given value (Step S108: No), the controller 20 returns to Step S105. In this case, the controller 20 maintains the CL1 hydraulic pressure at the second hydraulic pressure P2 by repeating Steps S105 and S108, until the rotational speed difference becomes below the given value.

Next, after the above-described Step S109, the controller 20 transits to Step S110, where it determines whether the state where the difference between the engine speed and the motor rotational speed (rotational speed difference) is below the given value (near 0) continues for the given period of time. Here, the controller 20 determines the situation where the difference in the torque between the engine 2 and the motor 4 becomes almost zero. Therefore, the given period of time used at Step S110 is defined in advance based on a period of time (obtained by an experiment, a simulation, or a given calculation formula) from when the engine speed almost coincides with the motor rotational speed until the difference in the torque between the engine 2 and the motor 4 is almost eliminated.

As a result of Step S110, if the state where the rotational speed difference is below the given value continued for the given period of time (Step S110: Yes), the controller 20 transits to Step S111. On the other hand, if the state where the rotational speed difference is below the given value has not yet continued for the given period of time (Step S110: No), the controller 20 returns to Step S109. In this case, the controller 20 may maintain the CL1 hydraulic pressure at the fourth hydraulic pressure P4 until the state where the rotational speed difference is below the given value continues for the given period of time, by repeating Steps S109 and S110.

Next, at Step S111, in order to set the first clutch CL1 to the fully engaged state, the controller 20 ends the temporary reduction of the CL1 hydraulic pressure to the fourth hydraulic pressure P4 and controls the first clutch CL1 to increase or gradually increase the CL1 hydraulic pressure. Then, when the CL1 hydraulic pressure reaches a final target hydraulic pressure corresponding to the fully engaged state of the first clutch CL1, the controller 20 transits to Step S112, where it ends the gradual increase of the CL1 hydraulic pressure and maintains the CL1 hydraulic pressure constant. Then, the controller 20 ends the engine startup control.

### [Operation and Effects]

Next, operation and effects of the method of controlling the hybrid vehicle and the control system according to this embodiment of the present invention are described.

According to this embodiment, when starting the engine 2 in order to switch the traveling mode from the first traveling mode to the second traveling mode, the controller 20 temporarily reduces the hydraulic pressure applied to the first clutch CL1 so that the engaging torque of the first clutch CL1 is reduced, after the engine speed is raised by cranking with the motor 4 and before the engine speed coincides with the motor rotational speed. Therefore, when the engine speed synchronizes with the motor rotational speed, the transmitting torque of the first clutch CL1 can be reduced. As a result, the difference in the torque between the engine 2 and the motor 4 can be compensated or cancelled by the first clutch CL1 in the slip state where the transmitting torque is reduced. That is, it can be compensated or cancelled as the slip torque of the first clutch CL 1, and the vehicle shock caused by the difference in the torque can be suppressed. Further, since such a reduction of the engaging torque of the first clutch CL1 is temporary, the response of engine startup can be secured. Therefore, according to this embodiment, when starting the engine 2 in order to switch the traveling mode from the first traveling mode to the second traveling mode, the vehicle shock can be suppressed, while securing the response of the engine startup.

According to this embodiment, since the controller 20 starts the temporary reduction of the engaging torque of the first clutch CL1 when the difference between the engine speed and the motor rotational speed becomes below the given value, it can effectively suppress the vehicle shock caused by the difference in the torque between the engine 2 and the motor 4 during the rotation synchronization.

According to this embodiment, the controller 20 ends the temporary reduction of the engaging torque of the first clutch CL1 when the state where the difference between the engine speed and the motor rotational speed is below the given value continues for the given period of time, and starts the raise of the engaging torque for setting the first clutch CL1 to the fully engaged state. Therefore, at the timing when the difference in the torque between the engine 2 and the motor 4 is eliminated, it can securely end the temporary reduction of the engaging torque, and it becomes possible to effectively achieve both the assurance of the response of the engine startup and the suppression of the vehicle shock.

Further, according to this embodiment, the controller 20 applies the first hydraulic pressure P1 to the first clutch CL1 during the engine startup control so that the hydraulic chamber 15a of the first clutch CL1 is filled up with oil, and then continues applying to the first clutch CL1 the second hydraulic pressure P2 lower than the first hydraulic pressure P1. Therefore, the first clutch CL1 in the disengaged state can be transited to the engaged state, and the engine speed can be raised securely by cranking with the motor 4.

Further, according to this embodiment, when there is no fast startup demand of the engine 2, the controller 20 temporarily reduces the hydraulic pressure applied to the first clutch CL1 down to the third hydraulic pressure P3 lower than the second hydraulic pressure P2, after the first hydraulic pressure P1 is applied and before the second hydraulic pressure P2 is applied. Therefore, the shock which occurs when the first clutch CL1 in the disengaged state begins to engage can be reduced. On the other hand, when there is the fast startup demand of the engine 2, the controller 20 continues applying the second hydraulic pressure P2 to the first clutch CL1 after applying the first hydraulic pressure P1, without temporarily reducing the hydraulic pressure applied to the first clutch CL1 down to the third hydraulic pressure P3. Therefore, it can give priority to the prompt startup of the engine 2.

Further, according to this embodiment, the controller 20 sets the hydraulic pressure (fourth hydraulic pressure P4) applied to the first clutch CL1 in order to temporarily reduce the engaging torque of the first clutch CL1, to the pressure lower than the second hydraulic pressure P2 and higher than the third hydraulic pressure P3. Therefore, it becomes possible to effectively achieve both the assurance of the response of the engine startup and the suppression of the vehicle shock.

### Description of Reference Characters

- 1: Hybrid Vehicle
- 2: Engine
- 4: Motor
- 5: Battery
- 6: Transmission
- 8: Power Transmission System
- 12: Wheel
- 15a: Hydraulic Chamber
- 15c: Clutch Piston
- 15d: First Clutch Plate
- 15e: Second Clutch Plate
- 15f: Solenoid
- 20: Controller (Control Device)
- CL1: First Clutch (Friction Engagement Element)
- CL2: Second Clutch

## Claims

1. A method of controlling a hybrid vehicle (1) including an engine (2), a motor (4), and a friction engagement element (CL1) provided between the engine (2) and the motor (4) so as to be engageable and disengageable, wherein an engine startup control for starting the engine (2) stopped is performed in order to switch a traveling mode from a traveling mode in which the hybrid vehicle (1) travels using a torque of the motor (4), without using a torque of the engine (2), to a traveling mode in which the hybrid vehicle (1) travels at least using the torque of the engine (2), comprising steps of:
raising an engine speed by cranking of the motor (4), while transiting the friction engagement element (CL1) in a disengaged state to an engaged state, when the engine startup control is started;
temporarily reducing an engaging torque of the friction engagement element (CL1), after the engine speed is raised by the cranking of the motor (4) and before the engine speed coincides with a motor rotational speed; and
raising the engaging torque to set the friction engagement element (CL1) to a fully engaged state, after the temporarily reducing the engaging torque and the engine speed coincides with the motor rotational speed,
wherein the friction engagement element (CL1) operates according to hydraulic pressure applied,
wherein the raising the engine speed includes:
applying a first hydraulic pressure (P1) to the friction engagement element (CL1) to fill up a hydraulic chamber (15a) of the friction engagement element (CL1) with oil;
continuously applying a second hydraulic pressure (P2) lower than the first hydraulic pressure (P1) to the friction engagement element (CL1), after applying the first hydraulic pressure (P1) and before the temporarily reducing the engaging torque; and
temporarily reducing the hydraulic pressure applied to the friction engagement element (CL1) down to a third hydraulic pressure (P3) lower than the second hydraulic pressure (P2), after applying the first hydraulic pressure (P1) and before applying the second hydraulic pressure (P2), when there is no acceleration demand from a vehicle driver during the engine startup control, **characterized in that** the raising the engine speed includes
continuously applying the second hydraulic pressure (P2) to the friction engagement element (CL1) without temporarily reducing the hydraulic pressure applied to the friction engagement element (CL1) down to the third hydraulic pressure (P3) after applying the first hydraulic pressure (P1) and before the temporarily reducing the engaging torque, when there is the acceleration demand from the driver during the engine startup control.

2. The method of claim 1, wherein the temporarily reducing the engaging torque includes starting the temporary reduction of the engaging torque, when a difference between the engine speed and the motor rotational speed becomes below a given value.

3. The method of claim 2, wherein the raising the engaging torque includes ending the temporary reduction of the engaging torque, and starting the raise of the engaging torque for setting the friction engagement element (CL1) to the fully engaged state, when a state where a difference between the engine speed and the motor rotational speed is below the given value continues for a given period of time.

4. The method of claim 1, wherein the raising the engaging torque includes ending the temporary reduction of the engaging torque, and starting the raise of the engaging torque for setting the friction engagement element (CL1) to the fully engaged state, when a state where a difference between the engine speed and the motor rotational speed is below a given value continues for a given period of time.

5. The method of any one of the preceding claims, wherein, in the temporarily reducing the engaging torque, the hydraulic pressure applied to the friction engagement element (CL1) is lower than the second hydraulic pressure (P2) and higher than the third hydraulic pressure (P3).

6. A control system for a hybrid vehicle (1), comprising:
an engine (2);
a motor (4);
a friction engagement element (CL1) provided between the engine (2) and the motor (4) so as to be engageable and disengageable; and
a control device (20) adapted to control the engine (2), the motor (4), and the friction engagement element (CL1) so that an engine startup control for starting the engine stopped is performed in order to switch a traveling mode from a traveling mode in which the hybrid vehicle (1) travels using a torque of the motor (4) without using a torque of the engine (2), to a traveling mode in which the hybrid vehicle (1) travels at least using the torque of the engine (2),
wherein the control device (20) is adapted to:
raise an engine speed by cranking of the motor (4), while transiting the friction engagement element (CL1) from a disengaged state to an engaged state, when the engine startup control is started;
temporarily reduce an engaging torque of the friction engagement element (CL1), after the engine speed is raised by cranking of the motor (4) and before the engine speed coincides with a motor rotational speed; and
raise the engaging torque to set the friction engagement element (CL1) to a fully engaged state, after temporarily reducing the engaging torque and the engine speed coincides with the motor rotational speed,
wherein
the friction engagement element (CL1) is configured to operate according to hydraulic pressure applied,
the control device (20) is adapted to, when raising the engine speed,
apply a first hydraulic pressure (P1) to the friction engagement element (CL1) to fill up a hydraulic chamber (15a) of the friction engagement element (CL1) with oil, and
continuously apply a second hydraulic pressure (P2) lower than the first hydraulic pressure (P1) to the friction engagement element (CL1), after applying the first hydraulic pressure (P1) and before the temporarily reducing the engaging torque, and
temporarily reduce the hydraulic pressure applied to the friction engagement element (CL1) down to a third hydraulic pressure (P3) lower than the second hydraulic pressure (P2), after applying the first hydraulic pressure (P1) and before applying the second hydraulic pressure (P2), when there is no acceleration demand from a vehicle driver during the engine startup control, **characterized in that**
the control device (20) is adapted to continuously apply the second hydraulic pressure (P2) to the friction engagement element (CL1) without temporarily reducing the hydraulic pressure applied to the friction engagement element (CL1) down to the third hydraulic pressure (P3) after applying the first hydraulic pressure (P1) and before the temporarily reducing the engaging torque, when there is the acceleration demand from the driver during the engine startup control.

7. The control system of claim 6, wherein the control device (20) is adapted to start the temporary reduction of the engaging torque, when a difference between the engine speed and the motor rotational speed becomes below a given value.

8. The control system of claim 6, wherein the control device (20) is adapted to end the temporary reduction of the engaging torque, and start the raise of the engaging torque for setting the friction engagement element (CL1) to the fully engaged state, when a state where a difference between the engine speed and the motor rotational speed is below a given value continues for a given period of time

9. A hybrid vehicle (1), comprising the control system of any one of claims claim 6 to 8.

## Patentansprüche

1. Verfahren zum Steuern eines Hybridfahrzeugs (1), das eine Antriebsmaschine (2), einen Motor (4) und ein Reibungseingriffselement (CL1) einschließt, das zwischen der Antriebsmaschine (2) und dem Motor (4) bereitgestellt ist, um in Eingriff genommen und gelöst werden zu können, wobei eine Antriebsmaschienenanlaufsteuerung zum Starten der gestoppten Antriebsmaschine (2) durchgeführt wird, um einen Fahrmodus von einem Fahrmodus, in dem das Hybridfahrzeug (1) unter Verwendung eines Drehmoments des Motors (4) fährt, ohne Verwenden eines Drehmoments der Antriebsmaschine (2), zu einem Fahrmodus umzuschalten, in dem das Hybridfahrzeug (1) mindestens unter Verwendung des Drehmoments der Antriebsmaschine (2) fährt, umfassend die Schritte:
Erhöhen einer Antriebsmaschinendrehzahl durch Anlassen des Motors (4), während des Durchquerens des Reibungseingriffselements (CL1) von einem gelösten Zustand in einen eingegriffenen Zustand, wenn die Antriebsmaschinenanlaufsteuerung gestartet wird;
vorübergehendes Reduzieren eines Eingriffsdrehmoments des Reibungseingriffselements (CL1), nachdem die Antriebsmaschinendrehzahl durch das Anlassen des Motors (4) erhöht wurde und bevor die Antriebsmaschinendrehzahl mit einer Motorrotationsdrehzahl übereinstimmt; und
Erhöhen des Eingriffsdrehmoments, um das Reibungseingriffselement (CL1) in einen vollständig eingegriffenen Zustand zu versetzen, nach dem vorübergehenden Reduzieren des Eingriffsdrehmoments und wobei die Antriebsmaschinendrehzahl mit der Motorrotationsdrehzahl übereinstimmt,
wobei das Reibungseingriffselement (CL1) gemäß dem aufgebrachten Hydraulikdruck arbeitet,
wobei das Erhöhen der Antriebsmaschinendrehzahl einschließt:
Aufbringen eines ersten Hydraulikdrucks (P1) an das Reibungseingriffselement (CL1), um eine Hydraulikkammer (15a) des Reibungseingriffselements (CL1) mit Öl aufzufüllen;
kontinuierliches Aufbringen eines zweiten Hydraulikdrucks (P2), der niedriger als der erste Hydraulikdruck (P1) ist, auf das Reibungseingriffselement (CL1), nach dem Aufbringen des ersten Hydraulikdrucks (P1) und vor dem vorübergehenden Reduzieren des Eingriffsdrehmoments; und
vorübergehendes Reduzieren des auf das Reibungseingriffselement (CL1) aufgebrachten Hydraulikdrucks auf einen dritten Hydraulikdruck (P3), der niedriger als der zweite Hydraulikdruck (P2) ist, nach dem Aufbringen des ersten Hydraulikdrucks (P1) und vor dem Aufbringen des zweiten Hydraulikdrucks (P2), wenn während der Antriebsmaschinenanlaufsteuerung keine Beschleunigungsanforderung von einem Fahrer des Fahrzeugs vorliegt,
**dadurch gekennzeichnet, dass**
das Erhöhen der Antriebsmaschinendrehzahl einschließt:
kontinuierliches Aufbringen des zweiten Hydraulikdrucks (P2) an das Reibungseingriffselement (CL1), ohne den auf das Reibungseingriffselement (CL1) aufgebrachten Hydraulikdruck vorübergehend auf den dritten Hydraulikdruck (P3) zu reduzieren, nachdem der erste Hydraulikdruck (P1) aufgebracht wurde und vor dem vorübergehenden Reduzieren des Eingriffsdrehmoments, wenn während der Antriebsmaschinenanlaufsteuerung eine Beschleunigungsanforderung von dem Fahrer vorliegt.

2. Verfahren nach Anspruch 1, wobei das vorübergehende Reduzieren des Eingriffsdrehmoments das Starten der vorübergehenden Reduzierung des Eingriffsdrehmoments einschließt, wenn eine Differenz zwischen der Antriebsmaschinendrehzahl und der Motorrotationsdrehzahl unter einen gegebenen Wert fällt.

3. Verfahren nach Anspruch 2, wobei das Erhöhen des Eingriffsdrehmoments das Beenden der temporären Reduzierung des Eingriffsdrehmoments und das Starten der Erhöhung des Eingriffsdrehmoments zum Versetzen des Reibungseingriffselements (CL1) in den vollständig eingegriffenen Zustand einschließt, wenn ein Zustand, in dem eine Differenz zwischen der Antriebsmaschinendrehzahl und der Motorrotationsdrehzahl unter dem gegebenen Wert liegt, für eine gegebene Zeitperiode anhält.

4. Verfahren nach Anspruch 1, wobei das Erhöhen des Eingriffsdrehmoments das Beenden der temporären Reduzierung des Eingriffsdrehmoments und das Starten der Erhöhung des Eingriffsdrehmoments zum Versetzen des Reibungseingriffselements (CL1) in den vollständig eingegriffenen Zustand einschließt, wenn ein Zustand, in dem eine Differenz zwischen der Antriebsmaschinendrehzahl und der Motorrotationsdrehzahl unter einem gegebenen Wert liegt, für eine gegebene Zeitperiode anhält.

5. Verfahren nach einem der vorstehenden Ansprüche, wobei beim vorübergehenden Reduzieren des Eingriffsdrehmoments der auf das Reibungseingriffselement (CL1) aufgebrachte Hydraulikdruck niedriger als der zweite Hydraulikdruck (P2) und höher als der dritte Hydraulikdruck (P3) ist.

6. Steuersystem für ein Hybridfahrzeug (1), umfassend:
eine Antriebsmaschine (2);
einen Motor (4);
ein Reibungseingriffselement (CL1), das zwischen der Antriebsmaschine (2) und dem Motor (4) bereitgestellt ist, um in Eingriff genommen und gelöst werden zu können; und
eine Steuervorrichtung (20), die angepasst ist, um die Antriebsmaschine (2), den Motor (4) und das Reibungseingriffselement (CL1) zu steuern, sodass eine Antriebsmaschinenanlaufsteuerung zum Starten der gestoppten Antriebsmaschine durchgeführt wird, um einen Fahrmodus von einem Fahrmodus, in dem das Hybridfahrzeug (1) unter Verwendung eines Drehmoments des Motors (4) fährt, ohne Verwenden eines Drehmoments der Antriebsmaschine (2), zu einem Fahrmodus umzuschalten, in dem das Hybridfahrzeug (1) mindestens unter Verwendung des Drehmoments der Antriebsmaschine (2) fährt,
wobei die Steuervorrichtung (20) angepasst ist zum:
Erhöhen der Antriebsmaschinendrehzahl durch Anlassen des Motors (4), während des Durchquerens des Reibungseingriffselements (CL1) von einem gelösten Zustand in einen eingegriffenen Zustand, wenn die Antriebsmaschinenanlaufsteuerung gestartet wird;
vorübergehendes Reduzieren eines Eingriffsdrehmoments des Reibungseingriffselements (CL1), nachdem die Antriebsmaschinendrehzahl durch das Anlassen des Motors (4) erhöht wurde und bevor die Antriebsmaschinendrehzahl mit einer Motorrotationsdrehzahl übereinstimmt; und
Erhöhen des Eingriffsdrehmoments, um das Reibungseingriffselement (CL1) in einen vollständig eingegriffenen Zustand zu versetzen, nachdem das Eingriffsdrehmoment vorübergehend reduziert wurde und die Antriebsmaschinendrehzahl mit der Motorrotationsdrehzahl übereinstimmt,
wobei
das Reibungseingriffselement (CL1) dazu konfiguriert ist, um gemäß dem aufgebrachten Hydraulikdruck zu arbeiten,
die Steuervorrichtung (20), beim Erhöhen der Antriebsmaschinendrehzahl, angepasst ist zum
Aufbringen eines ersten Hydraulikdrucks (P1) auf das Reibungseingriffselement (CL1), um eine Hydraulikkammer (15a) des Reibungseingriffselements (CL1) mit Öl aufzufüllen, und
kontinuierlichen Aufbringen eines zweiten Hydraulikdrucks (P2), der niedriger als der erste Hydraulikdruck (P1) ist, auf das Reibungseingriffselement (CL1), nach dem Aufbringen des ersten Hydraulikdrucks (P1) und vor dem vorübergehenden Reduzieren des Eingriffsdrehmoments, und
vorübergehenden Reduzieren des auf das Reibungseingriffselement (CL1) aufgebrachten Hydraulikdrucks auf einen dritten Hydraulikdruck (P3), der niedriger als der zweite Hydraulikdruck (P2) ist, nach dem Aufbringen des ersten Hydraulikdrucks (P1) und vor dem Aufbringen des zweiten Hydraulikdrucks (P2), wenn während der Antriebsmaschinenanlaufsteuerung keine Beschleunigungsanforderung von einem Fahrer des Fahrzeugs vorliegt,
**dadurch gekennzeichnet, dass**
die Steuervorrichtung (20) angepasst ist, um den zweiten Hydraulikdruck (P2) auf das Reibeingriffselement (CL1) kontinuierlich aufzubringen, ohne den auf das Reibeingriffselement (CL1) aufgebrachten Hydraulikdruck vorübergehend auf den dritten Hydraulikdruck (P3) zu reduzieren, nach dem Aufbringen des ersten Hydraulikdrucks (P1) und vor dem vorübergehenden Reduzieren des Eingriffsdrehmoments, wenn während der Antriebsmaschinenanlaufsteuerung eine Beschleunigungsanforderung von dem Fahrer vorliegt.

7. Steuersystem nach Anspruch 6, wobei die Steuervorrichtung (20) angepasst ist, um die vorübergehende Reduzierung des Eingriffsdrehmoments zu starten, wenn eine Differenz zwischen der Antriebsmaschinendrehzahl und der Motorrotationsdrehzahl unter einen gegebenen Wert fällt.

8. Steuersystem nach Anspruch 6, wobei die Steuervorrichtung (20) angepasst ist, um die vorübergehende Reduzierung des Eingriffsdrehmoments zu beenden und die Erhöhung des Eingriffsdrehmoments zum Versetzen des Reibungseingriffselements (CL1) in den vollständig eingegriffenen Zustand zu starten, wenn ein Zustand, in dem eine Differenz zwischen der Antriebsmaschinendrehzahl und der Motorrotationsdrehzahl unter einem gegebenen Wert liegt, für eine gegebene Zeitperiode anhält

9. Hybridfahrzeug (1), umfassend das Steuersystem nach einem der Ansprüche 6 bis 8.

## Revendications

1. Procédé de commande d'un véhicule hybride (1) comportant un moteur à combustible (2), un moteur (4) et un élément de mise en prise par friction (CL1) placé entre le moteur à combustible (2) et le moteur (4) de manière à pouvoir être mis en prise et désaccouplé, dans lequel une commande de démarrage de moteur à combustible destinée à démarrer le moteur à combustible (2) à l'arrêt est effectuée afin de faire passer un mode de déplacement d'un mode de déplacement dans lequel le véhicule hybride (1) se déplace en utilisant un couple du moteur (4), sans utiliser de couple du moteur à combustible (2), à un mode de déplacement dans lequel le véhicule hybride (1) se déplace au moins en utilisant le couple du moteur à combustible (2), comprenant les étapes consistant à :
augmenter une vitesse de moteur à combustible par démarrage du moteur (4), tout en faisant passer l'élément de mise en prise par friction (CL1) dans un état désaccouplé à un état en prise, lorsque la commande de démarrage de moteur à combustible est démarrée ;
réduire temporairement un couple de prise de l'élément de mise en prise par friction (CL1), une fois que la vitesse de moteur à combustible a été augmentée par le démarrage du moteur (4) et avant que la vitesse de moteur à combustible ne coïncide avec une vitesse de rotation de moteur ; et
augmenter le couple de prise pour mettre l'élément de mise en prise par friction (CL1) dans un état complètement en prise, après la réduction temporaire du couple de prise et une fois que la vitesse de moteur à combustible a coïncidé avec la vitesse de rotation de moteur,
dans lequel l'élément de mise en prise par friction (CL1) fonctionne selon une pression hydraulique appliquée,
dans lequel l'augmentation de la vitesse de moteur à combustible comporte :
l'application d'une première pression hydraulique (P1) à l'élément de mise en prise par friction (CL1) afin de remplir une chambre hydraulique (15a) de l'élément de mise en prise par friction (CL1) avec de l'huile ;
l'application continue d'une deuxième pression hydraulique (P2) inférieure à la première pression hydraulique (P1) à l'élément de mise en prise par friction (CL1), après l'application de la première pression hydraulique (P1) et avant la réduction temporaire du couple de prise ; et
la réduction temporaire de la pression hydraulique appliquée à l'élément de mise en prise par friction (CL1) jusqu'à une troisième pression hydraulique (P3) inférieure à la deuxième pression hydraulique (P2), après l'application de la première pression hydraulique (P1) et l'application de la deuxième pression hydraulique (P2), lorsqu'il n'y a pas de demande d'accélération de la part d'un conducteur de véhicule pendant la commande de démarrage de moteur à combustible, **caractérisé en ce que**
l'augmentation de la vitesse de moteur à combustible comporte
l'application continue de la deuxième pression hydraulique (P2) à l'élément de mise en prise par friction (CL1) sans réduire temporairement la pression hydraulique appliquée à l'élément de mise en prise par friction (CL1) jusqu'à la troisième pression hydraulique (P3) après l'application de la première pression hydraulique (P1) et avant la réduction temporaire du couple de prise, lorsqu'il y a la demande d'accélération de la part du conducteur pendant la commande de démarrage de moteur à combustible.

2. Procédé selon la revendication 1, dans lequel la réduction temporaire du couple de prise comporte le commencement de la réduction temporaire du couple de prise, lorsqu'une différence entre la vitesse de moteur à combustible et la vitesse de rotation de moteur devient inférieure à une valeur donnée.

3. Procédé selon la revendication 2, dans lequel l'augmentation du couple de prise comporte la terminaison de la réduction temporaire du couple de prise, et le commencement de l'augmentation du couple de prise pour mettre l'élément de mise en prise par friction (CL1) dans l'état complètement en prise, lorsqu'un état dans lequel une différence entre la vitesse de moteur à combustible et la vitesse de rotation de moteur est inférieure à la valeur donnée persiste pendant une période de temps donnée.

4. Procédé selon la revendication 1, dans lequel l'augmentation du couple de prise comporte la terminaison de la réduction temporaire du couple de prise, et le commencement de l'augmentation du couple de prise pour mettre l'élément de mise en prise par friction (CL1) dans l'état complètement en prise, lorsqu'un état dans lequel une différence entre la vitesse de moteur à combustible et la vitesse de rotation de moteur est inférieure à une valeur donnée persiste pendant une période de temps donnée.

5. Procédé selon l'une quelconque des revendications précédentes, dans lequel, pendant la réduction temporaire du couple de prise, la pression hydraulique appliquée à l'élément de mise en prise par friction (CL1) est inférieure à la deuxième pression hydraulique (P2) et supérieure à la troisième pression hydraulique (P3).

6. Système de commande pour un véhicule hybride (1), comprenant :
un moteur à combustible (2) ;
un moteur (4) ;
un élément de mise en prise par friction (CL1) placé entre le moteur à combustible (2) et le moteur (4) de manière à pouvoir être mis en prise et désaccouplé ; et
un dispositif de commande (20) conçu pour commander le moteur à combustible (2), le moteur (4) et l'élément de mise en prise par friction (CL1), de sorte qu'une commande de démarrage de moteur à combustible destinée à démarrer le moteur à combustible à l'arrêt soit effectuée afin de faire passer un mode de déplacement d'un mode de déplacement dans lequel le véhicule hybride (1) se déplace en utilisant un couple du moteur (4), sans utiliser de couple du moteur à combustible (2), à un mode de déplacement dans lequel le véhicule hybride (1) se déplace au moins en utilisant le couple du moteur à combustible (2),
dans lequel le dispositif de commande (20) est conçu pour :
augmenter une vitesse de moteur à combustible par démarrage du moteur (4), tout en faisant passer l'élément de mise en prise par friction (CL1) d'un état désaccouplé à un état en prise, lorsque la commande de démarrage de moteur à combustible est démarrée ;
réduire temporairement un couple de prise de l'élément de mise en prise par friction (CL1), une fois que la vitesse de moteur à combustible a été augmentée par démarrage du moteur (4) et avant que la vitesse de moteur à combustible ne coïncide avec une vitesse de rotation de moteur ; et
augmenter le couple de prise pour mettre l'élément de mise en prise par friction (CL1) dans un état complètement en prise, après la réduction temporaire du couple de prise et une fois que la vitesse de moteur à combustible a coïncidé avec la vitesse de rotation de moteur,
dans lequel
l'élément de mise en prise par friction (CL1) est conçu pour fonctionner selon une pression hydraulique appliquée,
le dispositif de commande (20) est conçu pour, lors de l'augmentation de la vitesse de moteur à combustible,
appliquer une première pression hydraulique (P1) à l'élément de mise en prise par friction (CL1) afin de remplir une chambre hydraulique (15a) de l'élément de mise en prise par friction (CL1) avec de l'huile, et
appliquer en continu une deuxième pression hydraulique (P2) inférieure à la première pression hydraulique (P1) à l'élément de mise en prise par friction (CL1), après l'application de la première pression hydraulique (P1) et avant la réduction temporaire du couple de prise, et
réduire temporairement la pression hydraulique appliquée à l'élément de mise en prise par friction (CL1) jusqu'à une troisième pression hydraulique (P3) inférieure à la deuxième pression hydraulique (P2), après l'application de la première pression hydraulique (P1) et l'application de la deuxième pression hydraulique (P2), lorsqu'il n'y a pas de demande d'accélération de la part d'un conducteur de véhicule pendant la commande de démarrage de moteur à combustible, **caractérisé en ce que**
le dispositif de commande (20) est conçu pour appliquer en continu la deuxième pression hydraulique (P2) à l'élément de mise en prise par friction (CL1) sans réduire temporairement la pression hydraulique appliquée à l'élément de mise en prise par friction (CL1) jusqu'à la troisième pression hydraulique (P3) après l'application de la première pression hydraulique (P1) et avant la réduction temporaire du couple de prise, lorsqu'il y a la demande d'accélération de la part du conducteur pendant la commande de démarrage de moteur à combustible.

7. Système de commande selon la revendication 6, dans lequel le dispositif de commande (20) est conçu pour commencer la réduction temporaire du couple de prise, lorsqu'une différence entre la vitesse de moteur à combustible et la vitesse de rotation de moteur devient inférieure à une valeur donnée.

8. Système de commande selon la revendication 6, dans lequel le dispositif de commande (20) est conçu pour terminer la réduction temporaire du couple de prise, et pour commencer l'augmentation du couple de prise pour mettre l'élément de mise en prise par friction (CL1) dans l'état complètement en prise, lorsqu'un état dans lequel une différence entre la vitesse de moteur à combustible et la vitesse de rotation de moteur est inférieure à une valeur donnée persiste pendant une période de temps donnée

9. Véhicule hybride (1), comprenant le système de commande selon l'une quelconque des revendications 6 à 8.
